# EUROPÄISCHE PATENTANMELDUNG

(11) **EP 2 559 867 A1**
(43) Veröffentlichungstag der Anmeldung: **20.02.2013**
(21) Anmeldenummer: 11178136.5
(22) Anmeldetag: 19.08.2011
(51) Int. Cl.: F01K 23/10, F01K 23/16, F02C 3/34, F02C 7/08, F02C 7/143, F01K 25/10

(54) **Verfahren zum Erzeugen von elektrischer Energie mittels eines Kombikraftwerkes sowie Kombikraftwerk zur Durchführung des Verfahrens**

(71) Anmelder: Alstom Technology Ltd, 5400 Baden (CH)
(72) Erfinder: Ruchti, Christoph, 8610 Uster (CH)

(57) **Zusammenfassung**

Die Erfindung geht aus von einem Verfahren zum Erzeugen von elektrischer Energie mittels eines Kombikraftwerkes (10a), bei welchem Verfahren in einer Gasturbine (11) durch Verbrennen eines Brennstoffs mittels in einem Verdichter (13) verdichteter Luft ein Heissgas erzeugt und in einer nachfolgenden Turbine (15) unter Arbeitsleistung entspannt wird und das Abgas (34) aus der Turbine (15) in einem nachgeschalteten Abhitzedampferzeuger (12a) zur Erzeugung von Dampf in einem mit einer Dampfturbine (20) ausgerüsteten Wasser-Dampf-Kreislauf (18) eingesetzt wird.Eine Verbesserung der Leistung und des Wirkungsgrads wird auf einfache Weise dadurch erreicht, dass im Abgas (34) Wasserdampf enthalten ist und die im Wasserdampf enthaltene latente Wärme zusätzlich zur Energieerzeugung herangezogen wird.

## Beschreibung

### TECHNISCHES GEBIET

Die vorliegende Erfindung bezieht sich auf das Gebiet der Kraftwerkstechnik. Sie betrifft ein Verfahren zum Erzeugen von elektrischer Energie gemäss dem Oberbegriff des Anspruchs 1. Sie betrifft weiterhin ein Kombikraftwerk zur Durchführung des Verfahrens.

### STAND DER TECHNIK

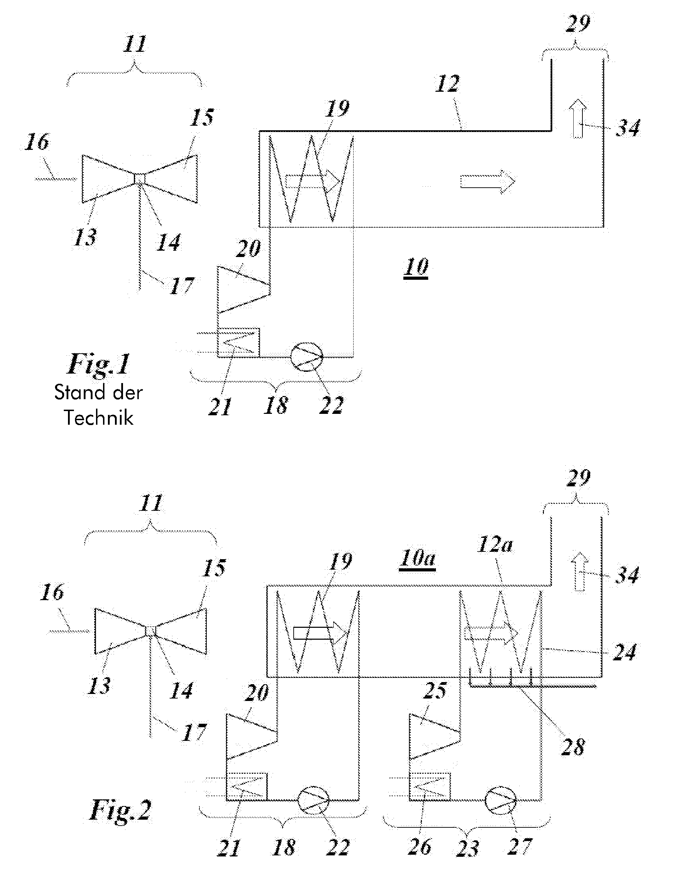

Die vorliegende Erfindung geht aus von einem Kombikraftwerk nach dem Stand der Technik, wie es schematisch in Fig. 1 wiedergegeben ist. Das Kombikraftwerk 10 der Fig. 1 umfasst eine Gasturbine 11, die in der vereinfachten Darstellung einen Verdichter 13, eine Brennkammer 14 und eine Turbine 15 aufweist. Tatsächlich wird in den nachfolgenden Erläuterungen von einer Gasturbine mit sequenzieller Verbrennung ausgegangen, die in Strömungsrichtung hintereinander angeordnet eine erste Brennkammer und eine erste Turbine sowie eine zweite Brennkammer und eine zweite Turbine aufweist. Eine solche Gasturbine ist beispielsweise aus der Druckschrift EP 0 978 635 A1 bekannt. Der Verdichter 13 saugt einen Luftmassenstrom 16 an, verdichtet diesen und speist ihn in die Brennkammer 14 beziehungsweise beide Brennkammern ein, wo er zur Verbrennung eines über die Brennstoffzufuhr 17 zugeführten Brennstoffs verwendet wird.

Das Heissgas aus der Brennkammer 14 wird in der nachfolgenden Turbine 15 unter Arbeitsleistung entspannt (bei der sequenziellen Verbrennung ist dies entsprechend ein zweistufiger Vorgang). Das Abgas 34 aus der Turbine 15 wird durch einen nachgeschalteten Abhitzedampferzeuger 12 geschickt und über einen Abgaskamin 29 nach aussen abgegeben. Im Abhitzedampferzeuger 12 ist ein von dem Abgas 34 umströmter Verdampfer 19 angeordnet, der Teil eines geschlossenen Wasser-Dampf-Kreislaufs 18 ist. In dem Verdampfer 19 wird das von einer Speisewasserpumpe 22 herangeführte Wasser verdampft, der Dampf treibt eine Dampfturbine 20, wird dann in einem Kondensator 21 wieder kondensiert und zum Eingang der Speisewasserpumpe 21 zurückgeführt. Der Verdampfer, der auf die Figuren gezeichnet ist, ist eine vereinfachte Darstellung. In Tat und Wahrheit handelt es sich um einen Dreidruck-Reheat Kreislauf mit drein ineinander verschachtelten Verdampfern und drein entsprechenden Stufen der Dampfturbine.

Um den Wirkungsgrad eines solchen Kombikraftwerkes zu verbessern, wird üblicherweise versucht, die Einlasstemperaturen für die Turbinen zu erhöhen. Dies setzt jedoch aufwändige und umfangreiche Verbesserungen bei den verwendeten Werkstoffen beziehungsweise Kühlprozessen voraus. Es ist deshalb wünschenswert, den Wirkungsgrad einer solchen Anlage auf andere, einfachere Weise zu verbessern.

Aus dem Stand der Technik ist es bekannt, einen Verdichter, wie er in einer Gasturbine eingesetzt wird, durch eine Verdampfungskühlung zu kühlen. Entsprechende Kühlprozesse, die auf dem Einspritzen von Wasser in verschiedenen Verdichterstufen basieren, sind beispielsweise aus der Druckschrift WO 2004/010003 A2 oder der Druckschrift EP 1 138 955 A2 bekannt. Dabei bleibt in den meisten Fällen offen, woher das eingespritzte Wasser kommt. In einem Fall wird das Wasser als Kondensat in einem Zwischenkühler erzeugt (EP 0 770 771 A1). In einem anderen Fall stammt es aus dem Speisewasser-Vorwärmer eines Abhitzedampferzeugers (DE 199 00 026 A1).

Es ist weiterhin aus dem Stand der Technik bekannt, Niedertemperatur-Abwärme bestimmter Maschinen durch Niedertemperaturkreisläufe wie zum Beispiel ORC-Prozesse (Organic Rankine Cycle) nutzbar zu machen (siehe z.B. die US 2004/0255587 A1). Es ist auch bekannt, in einem Kombikraftwerk die in einem Kondensator des Wasser-Dampf-Kreislaufs abgeführte Wärme für die Verdampfung in einem ORC-Prozess zu nutzen (siehe die US 2006/0048515).

### DARSTELLUNG DER ERFINDUNG

Es ist eine Aufgabe der Erfindung, ein gattungsgemässes Verfahren zum Erzeugen von elektrischer Energie mittels eines Kombikraftwerkes so weiterzuentwickeln, dass auf einfache Weise und mit vergleichsweise geringem Aufwand der Wirkungsgrad verbessert werden kann.

Es ist weiterhin eine Aufgabe der Erfindung, ein Kombikraftwerk zur Durchführung eines solchen Verfahrens anzugeben.

Diese und andere Aufgaben werden durch die Gesamtheit der Merkmale der Ansprüche 1 und 10 gelöst.

Die Erfindung geht aus von einem Verfahren zum Erzeugen von elektrischer Energie mittels eines Kombikraftwerkes, bei welchem Verfahren in einer Gasturbine durch Verbrennen eines Brennstoffs mittels in einem Verdichter verdichteter Luft ein Heissgas erzeugt und in einer nachfolgenden Turbine unter Arbeitsleistung entspannt wird und das Abgas aus der Turbine in einem nachgeschalteten Abhitzedampferzeuger zur Erzeugung von Dampf in einem mit einer Dampfturbine ausgerüsteten Wasser-Dampf-Kreislauf eingesetzt wird.

Sie zeichnet sich dadurch aus, dass im Abgas Wasserdampf enthalten ist und die im Wasserdampf enthaltene latente Wärme zusätzlich zur Energieerzeugung herangezogen wird.

Eine Ausgestaltung des erfindungsgemässen Verfahrens ist dadurch gekennzeichnet, dass die im Wasserdampf des Abgases enthaltene latente Wärme dem Wasserdampf durch einen Niedertemperaturkreislauf entzogen wird.

Insbesondere umfasst der Niedertemperaturkreislauf eine Turbine, einen Kondensator, eine Pumpe und einen Verdampfer, wobei der Verdampfer von dem Abgas umströmt wird, nachdem das Abgas zur Erzeugung von Dampf in einem mit einer Dampfturbine ausgerüsteten Wasser-Dampf-Kreislauf eingesetzt worden ist.

Eine andere Ausgestaltung des Verfahrens nach der Erfindung ist dadurch gekennzeichnet, dass das bei der Verwendung der latenten Wärme entstehende Wasser gesammelt und einer weiteren Verwendung zugeführt wird.

Insbesondere wird das gesammelte Wasser zur Verdampfungskühlung in den Verdichter der Gasturbine eingespritzt.

Besonders vorteilhaft ist es dabei, wenn das gesammelte Wasser vor dem Einspritzen in den Verdichter durch das Abgas im Abhitzedampferzeuger vorgewärmt wird.

Eine weitere Ausgestaltung des Verfahrens nach der Erfindung zeichnet sich dadurch aus, dass ein Teil des Abgases am Ausgang des Abhitzedampferzeugers abgezweigt und zum Eingang der Gasturbine zurückgeführt wird.

Eine wieder andere Ausgestaltung ist dadurch gekennzeichnet, dass die im Verdichter der Gasturbine verdichtete Luft vor dem Verbrennen des Brennstoffs im Abhitzedampferzeuger vorgewärmt wird.

Gemäss einer weiteren Ausgestaltung wird eine Gasturbine mit sequenzieller Verbrennung verwendet.

Eine andere Ausgestaltung zeichnet sich dadurch aus, dass als Arbeitsmittel im Niedertemperaturkreislauf CO2 verwendet wird.

Das erfindungsgemässe Kombikraftwerk zur Durchführung des Verfahrens nach der Erfindung umfasst eine Gasturbine, einen der Gasturbine nachgeschalteten Abhitzedampferzeuger sowie einen Wasser-Dampf-Kreislauf mit einem im Abhitzedampferzeuger angeordneten ersten Verdampfer, einer Dampfturbine, einem Kondensator und einer Speisewasserpumpe. Es ist dadurch gekennzeichnet, dass zum Nutzbarmachen der latenten Wärme, die im Wasserdampf des durch den Abhitzedampferzeuger strömenden Abgases der Gasturbine ein Niedertemperaturkreislauf mit einem zweiten Verdampfer, einer Turbine, einen Kondensator und einer Pumpe vorgesehen ist, wobei der zweite Verdampfer im Abhitzedampferzeuger stromabwärts vom ersten Verdampfer angeordnet ist.

Gemäss einer Ausgestaltung des erfindungsgemässen Kombikraftwerkes enthält der Niedertemperaturkreislauf als Arbeitsmittel CO2.

Eine andere Ausgestaltung ist dadurch gekennzeichnet, dass dem zweiten Verdampfer zum Auffangen des kondensierten Wassers ein Wassersammler zugeordnet ist.

Eine wieder andere Ausgestaltung ist dadurch gekennzeichnet, dass das Kombikraftwerk mit einer Abgasrückführung versehen ist.

Gemäss einer anderen Ausgestaltung umfasst die Gasturbine einen Verdichter, wobei der Verdichter mit einer für eine Verdampfung Kühlung geeigneten Einspritzvorrichtung ausgerüstet ist, und die Einspritzvorrichtung mit dem Wassersammler verbunden ist.

Insbesondere ist dabei zwischen dem Wassersammler und der Einspritzvorrichtung ein Vorwärmer vorgesehen, welcher im Abhitzedampferzeuger zwischen dem ersten und zweiten Verdampfer angeordnet ist.

Eine andere Ausgestaltung zeichnet sich dadurch aus, dass im Abhitzedampferzeuger ein Rekuperator zum Vorwärmen der im Verdichter der Gasturbine verdichteten Luft angeordnet ist.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: ein stark vereinfachtes Anlagenschema eines Kombikraftwerks mit einer Gasturbine mit sequenzieller Verbrennung gemäss dem Stand der Technik;
- Fig. 2: in einer zu Fig. 1 vergleichbaren Darstellung ein erstes Ausführungsbeispiel eines Kombikraftwerks nach der Erfindung mit Nutzbarmachung der latenten Wärme des im Abgas enthaltenen Wasserdampfs durch einen Niedertemperaturkreislauf;
- Fig. 3: in einer zu Fig. 2 vergleichbaren Darstellung ein zweites Ausführungsbeispiel eines Kombikraftwerks nach der Erfindung mit Nutzbarmachung der latenten Wärme des im Abgas enthaltenen Wasserdampfs durch einen Niedertemperaturkreislauf sowie zusätzlicher Abgasrückführung;
- Fig. 4: in einer zu Fig. 2 vergleichbaren Darstellung ein drittes Ausführungsbeispiel eines Kombikraftwerks nach der Erfindung mit Nutzbarmachung der latenten Wärme des im Abgas enthaltenen Wasserdampfs durch einen Niedertemperaturkreislauf sowie zusätzlicher Verdampfungskühlung des Verdichters durch das bei der Nutzbarmachung der latenten Wärme anfallende Wasser und Vorwärmen der verdichteten Luft in einem Rekuperator.

### WEGE ZUR AUSFÜHRUNG DER ERFINDUNG

Ein wesentliches Merkmal der vorliegende Erfindung ist es, bei einem Kombikraftwerk dem im Abgas durch den Abhitzedampferzeuger mitgeführten Wasserdampf durch Kondensation am kalten Ende des Abhitzedampferzeugers im wesentlichen die latente Wärme zu entziehen und zum Betreiben eines Niedertemperaturkreislaufs zu verwenden, um zusätzliche Energie zu erzeugen. Dazu werden am kalten Ende des Abhitzedampferzeugers zusätzliche Heizflächen angeordnet, die von Arbeitsmittel des Niedertemperaturkreislaufs durchströmt werden und einen Verdampfer bilden. Mithilfe dieses Verdampfers wird Wärme in den Niedertemperaturkreislauf übertragen und dort zum Betrieb einer entsprechenden Turbine verwendet. Ein wesentlicher Teil dieser übertragenen Wärme ist die latente Wärme des im Abgas mitgeführten Wasserdampfs. Das entstehende Kondensat kann grundsätzlich abgeführt werden. Besonders vorteilhaft ist es jedoch, das Kondensat zumindest teilweise zur Kühlung des Verdichters der Gasturbine zu verwenden. Dadurch verringert sich einerseits die Kompressorleistung merklich und es ergibt sich andererseits ein Wasser-Dampfkreislauf im gasseitigen 'Topping Cycle' Kombianlage. Das erhöht den Dampfgehalt der Abgase und damit auch die latente Wärme, welche am kalten Ende genutzt werden kann.

In Fig. 2 ist ein erstes Ausführungsbeispiel eines Kombikraftwerkes nach der Erfindung dargestellt. Das Kombikraftwerk 10a ist ähnlich aufgebaut wie das Kombikraftwerk 10 aus Fig. 1. Insbesondere werden die Gasturbine 11 und der am Abhitzedampferzeuger 12a hängende Wasser-Dampf-Kreislauf 18 mit demselben Betriebsparametern betrieben, wie bei der Anlage in Fig. 1. Der Abhitzedampferzeuger 12a der Fig. 2 unterscheidet sich von den Abhitzedampferzeuger 12 der Fig. 1 dadurch, dass am kalten Ende des Abhitzedampferzeugers 12a ein als Wärmetauscher aufgebauter Verdampfer 24 angeordnet und vom Abgas 34 umströmt wird, der Teil eines Niedertemperaturkreislaufs 23 ist.

Der Niedertemperaturkreislauf 23 umfasst den Verdampfer 24, eine Turbine 25, einen Kondensator 26 und einer Pumpe 27, die das im Kreis zirkulierende, im Kondensator 26 verflüssigte Arbeitsmittel zum Verdampfer 24 zurück pumpt. Grundsätzlich kann als Arbeitsmittel ein geeignetes Kältemittel verwendet werden. Aus Sicherheitsgründen ist es jedoch vorteilhaft, in der Kraftwerksumgebung CO2 als Arbeitsmittel im Niedertemperaturkreislauf 23 zu verwenden. Dies bietet die folgenden Vorteile:
● der Wärmeaustausch mit dem Abgas findet bei einem überkritischen CO2-Druck statt; dies ermöglicht eine geschickte Anpassung an das Temperaturprofil im Abhitzedampferzeuger 12a;
● die chemischen Gefahren werden minimiert; unvermeidbare Lecks im Kessel verursachen keine Schäden, wenn das ausströmende Medium mit dem Abgas in die Umwelt gelangt; und
● es gibt Synergie-Effekte im Zusammenhang mit den aktuellen verfahrenstechnischen und apparativen Bemühungen um die Abscheidung von CO2.

Mit dem Niedertemperaturkreislauf 23 erhöht sich die Leistung und -der Wirkungsgrad des Kombikraftwerkes 10a. Die Temperatur des Abgases 34 wird durch den Verdampfer 24 erniedrigt. Der Verdampfer 24 liefert einen Massenstrom des Arbeitsmittels (CO2), der in der Turbine 25 eine hohe Leistung erzeugt. Das Arbeitsmittel wird im Kondensator 26 abgekühlt und verflüssigt. An den Wärmetauscherflächen des Verdampfers 24 kondensiert Wasser aus dem Abgas 34 und wird von einem Wassersammler 28 aufgefangen. Bei den vorgegebenen Parametern fällt am Wassersammler 28 ein hoher Wasserstrom an.

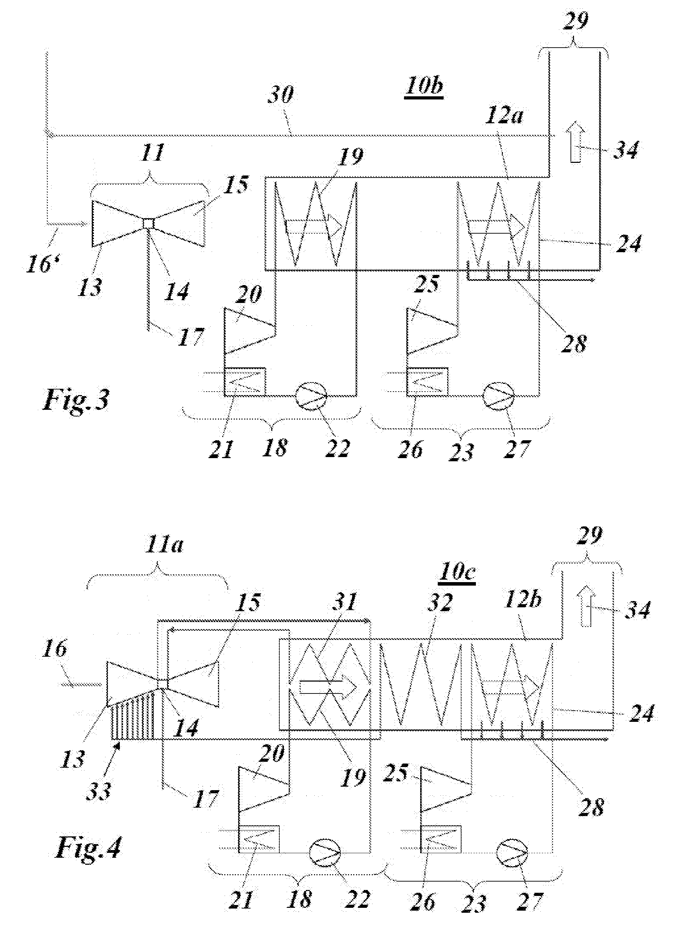

Der Niedertemperaturkreislauf 23 am Abhitzedampferzeuger 12a kann im Zusammenhang mit einer CO2-Abscheidung von Vorteil sein. Ein entsprechendes Ausführungsbeispiel ist in Fig. 3 wiedergegeben. Das Kombikraftwerk 10b der Fig. 3 hat bezüglich Gasturbine 11 und Abhitzedampferzeuger 12a den gleichen Aufbau wie das Kombikraftwerk 10a aus Fig. 2. Zusätzlich ist hier jedoch eine Abgasrückführung 30 vorgesehen, über die vom Abgaskamin 29 ein Teil des Abgases 34 auf den Eingang der Gasturbine 11 zurückgeführt wird und dort als Ansaugmassenstrom 16' mit einer hinsichtlich des CO2-Anteils geänderten Zusammensetzung eintritt. Hierdurch wird der CO2-Gehalt im Abgas 34 erhöht. Bei den bisherigen Verfahren und Anlagen mit Abgasrückführung zur CO2-Aufkonzentration wurden Direktkontakt-Kühler vorgesehen. Das Ersetzen solcher Direktkontakt-Kühler durch den Verdampfer 24 eines Niedertemperaturkreislaufs hat verschiedene Vorteile:
● der Wirkungsgrad des Kombikraftwerkes erhöht sich mit dem Niedertemperaturkreislauf;
● die in Fig. 3 dargestellte Konfiguration macht es möglich, dasselbe Anlagenschema für beide Anwendungen einzusetzen, nämlich herkömmliche Kombikraftwerke und Anlagen mit CO2-Abscheidung;
● die Ausgangsleistung des Niedertemperaturkreislaufs verringert die Leistungseinbusse durch die CO2-Abscheidung;
● im Fall der CO2-Abscheidung verbessert sich die Ökonomie des Niedertemperaturkreislaufs; und
● die Abgasrückführung verschiebt möglicherweise die Grenze für die Heissgastemperatur im Hinblick auf die Erzeugung von NOx.

Die Wellenleistung am Verdichter trägt bei weitem am meisten zu den Verlusten im Kombikraftwerk bei. Das bei der Latentwärme-Nutzung anfallende Wasser kann daher (bei entsprechender Vorbehandlung) mit Vorteil zur Kühlung im Verdichter 13 eingesetzt werden, um die Verdichtungsarbeit in der Gasturbine 11 zu reduzieren. Die maximale Verdampfungskühlung durch Einspritzen wird dadurch erreicht, dass nach jeder Verdichtungsstufe genauso viel Wasser eingespritzt wird, wie nötig ist, um die Luft bis zum Taupunkt abzukühlen.

Des Weiteren wird die vom Verdichter 13 angesaugte Luft nach der Verdichtung in einem Rekuperator im Abhitzedampferzeuger vorgewärmt, um den Brennstoffverbrauch zu reduzieren. Ein entsprechendes Ausführungsbeispiel eines solchen Kombikraftwerkes ist in Fig. 4 dargestellt. Das Kombikraftwerk 10c der Fig. 4 weist gegenüber dem Kombikraftwerk 10a der Fig. 2 verschiedene Änderungen auf: Die Gasturbine 11 a ist nunmehr am Verdichter 13 mit einer Einspritzvorrichtung 33 zum Einspritzen von Wasser an den verschiedenen Verdichterstufen ausgestattet. Die Einspritzvorrichtung 33 ist verbunden mit dem Wassersammler 28 am Abhitzedampferzeuger 12b. Vom Wassersammler 28 wird zumindest ein Teil des angesammelten Wassers über einen zwischen den Verdampfern 19 und 24 im Abhitzedampferzeuger 12b angeordneten Vorwärmer 32 zur Einspritzvorrichtung 33 geleitet.

Weiterhin ist in Strömungsrichtung auf der Höhe des Verdampfers 19 ein Rekuperator 31 im Abhitzedampferzeuger 12b eingebaut, der die im Verdichter 13 verdichtete Luft weiter erhitzt. Die vom Verdichter 13 verbrauchte Leistung reduziert sich durch die Kühlung. Der Wassergehalt im Abgas erhöht sich. Die von der Dampfturbine 20 abgegebene Leistung sich reduziert, dafür erhöht sich die Leistung der Turbine 25.Ausserdem wird deutlich mehr Brennstoff zugeführt, wodurch sich die Leistung der Turbine 15 erhöht. Die gesamte Leistung des Kombikraftwerkes 10c erhöht sich bei gleichem Luftmassenstrom 16 um mehr als 30 %. Dies ist zum Teil eine Folge des zusätzlich eingespritzten Wassers. Ein weiterer signifikanter Beitrag ergibt sich daraus, dass sich die spezifische Wärme des Mediums mit steigendem Wassergehalt erhöht. Der Wirkungsgrad nimmt jedoch wegen der reduzierten Kompressorleistung zu.

Beim Betrieb ist die Luft, die im Verdichter 13 verdichtet wird, im Rekuperator 31 zugeführt. Im Rekuperator 31 wird die Lufttemperatur erhöht, ohne den Kompressor damit zu beeinflussen.

Der Verdichter 13 wird durch Wasser gekühlt. Vorteilhaft ist Wasser, die im Wassersammler 28 erholt wird, dem Verdichter 13 zugeführt. Ausserdem, erholt man bei dem Wassersammler 28 zusätzliches Wasser, das für anderen Zwecke benutzbar ist. Ein entscheidender Vorteil des verdampfungsgekühlten Verdichters 13 liegt darin, dass das Verdichtungsverhältnis und die Temperaturen der in die Brennkammer 14 strömenden heissen Luft entkoppelt werden. In der Anlage Gemäss Fig. 4, kann das Verdichtungsverhältnis beim Kompressor 13 der Gasturbine 11 a im Kombikraftwerk 10c weiter erhöht werden, ohne die Temperaturgrenzen des Materials am Verdichterausgang zu überschreiten. Der Druck an der ersten Brennkammer (pEV) wird erhöht, während der Druck an der zweiten Brennkammer (pSEV) bei dem bisherigen Wertverbleibt. Auf diese Weise kann die Gesamtleistung der Anlage erhöht werden.

In den bisherigen Ausführungsbeispielen wurde die Verbrennungstemperatur konstant gehalten. In der vorgeschlagenen Anlagenkonfiguration kann jedoch die Verbrennungstemperatur erhöht werden. In diesem Fall macht sich der Vorteil der sequenziellen Verbrennung (zwei Brennkammern, zwei Turbinen) bemerkbar: das Druckniveau in der zweiten Brennkammer (SEV) kann so gewählt werden, dass sich für den Niedertemperaturkreislauf 23 optimale Bedingungen ergeben.

Bei Kombikraftwerken wird davon ausgegangen, dass es ökonomisch nicht sinnvoll ist, die Dampftemperatur über etwa 600ºC bis 620ºC hinaus zu erhöhen. Dies würde zu einem massiven Einsatz von teuren Nickelbasislegierungen für die mit Druck beaufschlagten Komponenten führen. Es wird deshalb vorgeschlagen, den Druck einer zweiten Brennkammer (SEV) so auszuwählen, dass sich eine Auslasstemperatur der Gasturbine in einem akzeptablen Bereich ergibt.

Im Übrigen versteht sich von selbst, dass die Abgasrückführung gemäss Fig. 3 mit der Verdampfungskühlung des Verdichters 13 gemäss Fig. 4 miteinander kombiniert werden können.

### BEZUGSZEICHENLISTE

- 10,10a-c: Kombikraftwerk
- 11,11a: Gasturbine
- 12,12a,b: Abhitzedampferzeuger
- 13: Verdichter
- 14: Brennkammer
- 15: Turbine
- 16: Luftmassenstrom
- 16': Ansaugmassenstrom
- 17: Brennstoffzufuhr
- 18: Wasser-Dampf-Kreislauf
- 19,24: Verdampfer
- 20: Dampfturbine
- 21,26: Kondensator
- 22: Speisewasserpumpe
- 23: Niedertemperaturkreislauf (z.B. Organic Rankine Cycle ORC)
- 25: Turbine
- 27: Pumpe
- 28: Wassersammler
- 29: Abgaskamin
- 30: Abgasrückführung
- 31: Rekuperator
- 32: Vorwärmer
- 33: Einspritzvorrichtung (Verdampfungskühlung)

## Patentansprüche

1. Verfahren zum Erzeugen von elektrischer Energie mittels eines Kombikraftwerkes (10, 10a-c), bei welchem Verfahren in einer Gasturbine (11, 11a) durch Verbrennen eines Brennstoffs mittels in einem Verdichter (13) verdichteter Luft ein Heissgas erzeugt und in einer nachfolgenden Turbine (15) unter Arbeitsleistung entspannt wird und das Abgas (34) aus der Turbine (15) in einem nachgeschalteten Abhitzedampferzeuger (12a,b) zur Erzeugung von Dampf in einem mit einer Dampfturbine (20) ausgerüsteten Wasser-Dampf-Kreislauf (18) eingesetzt wird, **dadurch gekennzeichnet, dass** im Abgas (34) Wasserdampf enthalten ist und die im Wasserdampf enthaltene latente Wärme zusätzlich zur Energieerzeugung herangezogen wird.

2. Verfahren nach Anspruch 1, **dadurch gekennzeichnet, dass** die im Wasserdampf des Abgases (34) enthaltene latente Wärme dem Wasserdampf durch einen Niedertemperaturkreislauf (23) entzogen wird.

3. Verfahren nach Anspruch 2, **dadurch gekennzeichnet, dass** der Niedertemperaturkreislauf (23) eine Turbine (25), einen Kondensator (26), eine Pumpe (27) und einen Verdampfer (24) umfasst, und dass der Verdampfer (24) von dem Abgas (34) umströmt wird, nachdem das Abgas (34) zur Erzeugung von Dampf in einem mit einer Dampfturbine (20) ausgerüsteten Wasser-Dampf-Kreislauf (18) eingesetzt worden ist.

4. Verfahren nach einem der Ansprüche 1-3, **dadurch gekennzeichnet, dass** das bei der Verwendung der latenten Wärme entstehende Wasser gesammelt und einer weiteren Verwendung zugeführt wird.

5. Verfahren nach Anspruch 4, **dadurch gekennzeichnet, dass** das gesammelte Wasser zur Verdampfungskühlung in den Verdichter (13) der Gasturbine (11a) eingespritzt wird.

6. Verfahren nach Anspruch 5, **dadurch gekennzeichnet, dass** das gesammelte Wasser vor dem Einspritzen in den Verdichter (13) durch das Abgas (34) im Abhitzedampferzeuger (12b) vorgewärmt wird.

7. Verfahren nach einem der Ansprüche 1-3, **dadurch gekennzeichnet, dass** ein Teil des Abgases (34) am Ausgang des Abhitzedampferzeugers (12a) abgezweigt und zum Eingang der Gasturbine (11) zurückgeführt wird.

8. Verfahren nach einem der Ansprüche 1-6, **dadurch gekennzeichnet, dass** die im Verdichter (13) der Gasturbine (11a) verdichtete Luft vor dem Verbrennen des Brennstoffs im Abhitzedampferzeuger (12b) vorgewärmt wird.

9. Verfahren nach Anspruch 2 oder 3, **dadurch gekennzeichnet, dass** als Arbeitsmittel im Niedertemperaturkreislauf (23) CO2 verwendet wird.

10. Kombikraftwerk (10a-c) zur Durchführung des Verfahrens nach einem der Ansprüche 1-9, umfassend eine Gasturbine (11, 11 a), einen der Gasturbine (11, 11a) nachgeschalteten Abhitzedampferzeuger (12a,b) sowie einen Wasser-Dampf-Kreislauf (18) mit einem in Abhitzedampferzeuger (12a,b) angeordneten ersten Verdampfer (19), einer Dampfturbine, einem Kondensator (21) und einer Speisewasserpumpe (22), **dadurch gekennzeichnet, dass** zum Nutzbarmachen der latenten Wärme, die im Wasserdampf des durch den Abhitzedampferzeuger strömenden Abgases der Gasturbine (11, 11a) ein Niedertemperaturkreislauf (23) mit einem zweiten Verdampfer (24), einer Turbine (25), einen Kondensator (46) und einer Pumpe (27) vorgesehen ist, wobei der zweite Verdampfer (24) im Abhitzedampferzeuger (12a,b) stromabwärts vom ersten Verdampfer (19) angeordnet ist.

11. Kombikraftwerk nach Anspruch 10, **dadurch gekennzeichnet, dass** dem zweiten Verdampfer (24) zum Auffangen des kondensierten Wassers ein Wassersammler (28) zugeordnet ist.

12. Kombikraftwerk nach einem der Ansprüche 10-11, **dadurch gekennzeichnet, dass** das Kombikraftwerk (10b) mit einer Abgasrückführung (30) versehen ist.

13. Kombikraftwerk nach Anspruch 11, **dadurch gekennzeichnet, dass** die Gasturbine (11a,b) einen Verdichter (13) umfasst, dass der Verdichter (13) mit einer für eine Verdampfung Kühlung geeigneten Einspritzvorrichtung (33) ausgerüstet ist, und dass die Einspritzvorrichtung (33) mit dem Wassersammler (28) verbunden ist.

14. Kombikraftwerk nach Anspruch 13, **dadurch gekennzeichnet, dass** zwischen dem Wassersammler (28) und der Einspritzvorrichtung (33) ein Vorwärmer (32) vorgesehen ist, welcher im Abhitzedampferzeuger (12b) zwischen dem ersten und zweiten Verdampfer (19, 24) angeordnet ist.

15. Kombikraftwerk nach einem der Ansprüche 10-14, **dadurch gekennzeichnet, dass** im Abhitzedampferzeuger (12b) ein Rekuperator (31) zum Vorwärmen der im Verdichter (13) der Gasturbine (11a-d) verdichteten Luft angeordnet ist.
